# EUROPÄISCHE PATENTANMELDUNG

(11) **EP 1 528 393 A1**
(43) Veröffentlichungstag der Anmeldung: **04.05.2005**
(21) Anmeldenummer: 04024705.8
(22) Anmeldetag: 16.10.2004
(51) Int. Cl.: G01N 27/403

(54) **Verfahren zur Bestimmung von aktivem Katalysatormaterial in Suspensionen**

(30) Priorität: 29.10.2003 DE 10350524
(71) Anmelder: Bayer Technology Services GmbH, 51368 Leverkusen (DE)
(72) Erfinder: Boll, Matthias Dr., 51061 Köln (DE)

(57) **Zusammenfassung**

Es wird ein Verfahren zur online-Bestimmung der Konzentration von Katalysatormaterial in Suspensionen von Hydrierreaktionsmischungen beschrieben durch Bestimmen der Potentialdifferenz zwischen einer Messelektrode, die in die konstant gerührte Reaktionsmischung eintaucht und einer Referenzelektrode, wobei die Reaktionsmischung von Wasserstoff kontinuierlich durchströmt wird.

## Beschreibung

Die Erfmdung betrifft ein Verfahren zur online-Bestimmung der relativen Konzentration von hydrieraktivem und mit Wasserstoff gesättigtem Katalysatormaterial in Katalysatorsuspensionen.

Bei der Flüssigphasen-Hydrierung mit Raney-Nickel-Katalysatoren wurden bereits Versuche unternommen, durch die Kontrolle der Potentialdifferenz zwischen einer Referenzelektrode und dem Katalysator (beim Kontakt über eine Mess- oder Ableitelektrode) die Dosierung eines Nitroaromaten während der Hydrierung zu steuern (vgl. G. Alscher et al, Chem. Technik 48, (1996), 6, S. 323 sowie H. Ehwald et al, Verfahrenstechnik 32 (1998), 142, S. 41). Der Einsatz zur Kontrolle der Raney-Nickel-Katalysatorverteilung im Hydrierreaktor wird hierbei jedoch ebensowenig erwähnt wie die Quantifizierung des Rauschsignals zur Bestimmung der aktiven, mit Wasserstoff belegten Raney-Nickel-Konzentration. Die möglichst gleichmäßige Verteilung von Raney-Nickel-Katalysator, Wasserstoff und zu hydrierender Edukt in einen Hydrierreaktor ist die grundsätzliche Voraussetzung für eine Hydrierreaktion, die mit hoher Selektivität und Ausbeute verläuft. Die Konzentration des Raney-Nickel-Katalysators während des Hydrierprozesses ist aber abhängig von einer Vielzahl von Parametern, die eine rein theoretische (mathematische) Behandlung eines solchen Problems sehr erschweren. Um Totvolumina, in denen die Katalysatorkonzentration vergleichsweise gering ist, oder in denen es Ablagerungen von Raney-Nickel-Katalysatoren gibt, von Bereichen im Reaktor zu unterscheiden, in denen es eine hohe Flussrate von ausreichend aktiven Katalysatorteilchen gibt, muss eine online-Messmethode zur Bestimmung des aktiven Katalysators entwickelt werden, um zum Beispiel eine mögliche Oxidation des Nickels durch überschüssiges Edukt zu vermeiden.

Ein weiteres Anwendungsgebiet ist die schnelle Aktivitätsuntersuchung von Hydrierkatalysatoren, zum Beispiel bei Herstellern von Hydrierkatalysatoren. Durch eine Quantifizierung des Rauschsignals kann die Konzentration von aktivem Katalysatormaterial in einer festgelegten Katalysatorkonzentration bestimmt werden. Dieser Wert kann, neben dem Absolutwert der Potenzialdifferenz, zur Qualitätsüberwachung der jeweiligen Charge eingesetzt werden.

Gegenstand der Erfindung, durch die diese Aufgabe gelöst wird, ist ein Verfahren zur online-Bestimmung der Konzentration von aktivem Katalysatormaterial in katalysatorhaltigen Suspensionen von Hydrierreaktionsmischungen, durch Bestimmen der Potentialdifferenz und/oder der zeitlichen Schwankung dieser Differenz zwischen einer Messelektrode aus inertem Material, die in die konstant gerührte Reaktionsmischung eintaucht und einer Referenzelektrode, wobei die Reaktionsmischung von Wasserstoff kontinuierlich durchströmt wird.

Bevorzugt ist ein Verfahren, bei dem als Messgröße der Potentialdifferenz zwischen Referenzelektrode und Messelektrode die gemessene Absolutspannung oder ein Zeitmittelwert der Spannung über mindestens 1 min, bevorzugt mindestens 2 min, gegebenenfalls nach Konzentrationsänderung des Katalysators in der Mischung verwendet wird.

Als Messgröße kann bevorzugt auch die Standardabweichung von einer über einen Zeitraum, insbesondere von mindestens 30 Sekunden, gemessenen Absolutspannung verwendet werden.

Bevorzugt ist auch ein Verfahren, bei dem der pH-Wert der Reaktionsmischung während der Messung konstant gehalten wird, insbesondere durch Einsatz einer Pufferlösung.

In einem besonders bevorzugten Verfahren wird zusätzlich die Temperatur und/oder der Druck in der Reaktionsmischung konstant gehalten. Dieses führt auch zur Beseitigung von Messschwankungen.

Als Katalysator, der dem Verfahren zugänglich ist, wird bevorzugt Raney-Nickel oder Platin, Palladium oder Nickel jeweils auf Kohle oder Siliziumoxid als Trägermaterial eingesetzt, besonders bevorzugt Raney-Nickel und Platin auf Kohle.

Das generelle Verfahren, elektrochemische Potentiale an z.B. Gold- oder Platinableitelektroden oder an Ableitelektroden aus anderen Materialien zu messen, ist allgemein bekannt und wird vielfach angewendet (vgl. z.B. J. Pardillos-Guindet, J. of Catalysis 155, (1995), S. 12-20 oder U. Kürschner et al, Catalysis Letters 34, (1995), Seite 191-199).

Die Referenzelektrode wird gewöhnlich elektrisch-leitend, d.h. ionen-leitend mit der Reaktorlösung verbunden und befindet sich besonders bevorzugt außerhalb des Reaktors. Die Referenzelektrode soll damit von der Reaktionstemperatur unabhängig sein und ein zeitlich konstantes Potential liefern. Bevorzugt wird als Referenzelektrode eine Elektrode zweiter Art eingesetzt. Unter Elektrode zweiter Art versteht man Elektroden mit einem zeitunabhängigen und reproduzierbaren elektrochemischen Potential wie z.B. "Argental" (Ag/AgCl) or "Kalomel" (Hg/Hg₂Cl₂) Elektroden.

Als Messelektrode eignet sich besonders ein inertes Metall wie Gold, da an diesem Metall sehr oft keine weiteren chemischen Prozesse ablaufen, die das Potential beeinflussen könnten. Die Messelektrode besteht daher bevorzugt aus einem chemischen inerten Metall, insbesondere aus Gold, bevorzugt ausgebildet als Blech, Draht oder Gitter.

Weiterer Gegenstand der Erfindung ist ein Verfahren zur Durchführung von Hydrierreaktionen in Lösung unter Verwendung von in der Reaktionsmischung suspendiertem Hydrierkatalysator, das
dadurch gekennzeichnet ist, dass das erfindungsgemäße Verfahren zur Bestimmung der Katalysatorkonzentration zur Überwachung der aktiven Katalysatorkonzentration eingesetzt wird.

Aktiver Katalysator im Sinne der Erfindung bedeutet einerseits ein für die Hydrierung katalytisch wirksamer Katalysator, andererseits auch ein Katalysator der hinreichend mit Wasserstoff belegt ist. Es ist auch möglich, bevorzugt das Verfahren so abzuwandeln, dass bei konstanter Katalysatorkonzentration die Belegung des Katalysators mit Wasserstoff verfolgt wird.

### Das erfindungsgemäße Verfahren ermöglicht folgende Vorteile:

Einerseits ist eine Standzeitverlängerung des Katalysators insbesondere bei Raney-Nickel-Katalysator durch Verlängerung der Haltbarkeit möglich. Weiter wird das Verfahren zur Qualitätssicherung bei der Herstellung von Katalysatormaterial, insbesondere Raney-Nickel-Katalysator oder zur Qualitätssicherung des Reaktionsverlaufes bei Hydrierreaktionen eingesetzt.

Gegenstand der Erfindung ist auch ein Verfahren zur Qualitätsbestimmung von Hydrierkatalysatoren in einer gepufferten Lösung, dadurch gekennzeichnet, dass das oben beschriebene erfindungsgemäße Verfahren zur Ermittlung der relativen Konzentration aktiver Katalysatorpartikel in einer Katalysatorsuspension bezogen auf die Gesamtmenge der Katalysatorpartikel eingesetzt wird, wobei die zeitliche Schwankung der Potentialdifferenz gemessen wird und die Konzentration mittels Eichung durch bekannte aktive Katalysatorsuspensionen erfolgt.

Die Erfindung wird nachstehend anhand der Figuren beispielhaft näher erläutert.

### Es zeigen:

- Fig. 1: ein Spannungs-/Zeitdiagramm für die Zugabe von Katalysatorsuspension
- Fig. 2: die Standardabweichung der Spannung von einem Zeitmittelwert
- Fig. 3: den Potentialverlauf mit der Zeit von aktiviertem und desaktiviertem Katalysator

### Beispiele

Es wurde die Potentialdifferenz zwischen der in eine simulierte Reaktionslösung eintauchenden Goldelektrode und einer mit der Lösung über eine Salzbrücke ionen-leitenden verbundenen Kalomelektrode (Referenzelektrode) gemessen.

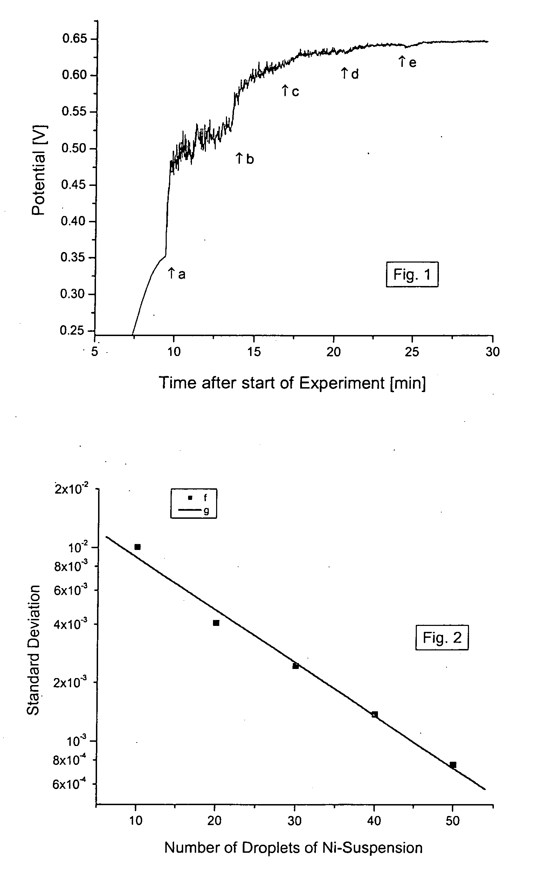

Fig. 1 zeigt die Absolutspannung in Anhängigkeit der Zugabe von frischen Raney-Nickel-Katalysatorlösung als Suspension zur einer Pufferlösung von 0,3 normaler K₂HPO₄/NaH₂PO₄-Pufferlösung. Die Lösung wurde bei 400 U/min des Rührers gerührt und Wasserstoff wurde in einer Menge von 10 ml/min durch die Lösung geleitet. In Fig. 1 sind die Zeitpunkte a) bis e) markiert, an denen jeweils 10 Tropfen einer definierten Raney-Nickel-Katalysatorsuspension zugegeben wurden. Der stufenweise Anstieg der Absolutspannung insbesondere in der anfänglichen Zugabe ist deutlich zu erkennen, außerdem erkennt man die Änderung der Rauschbreite (Änderung der Standard-Abweichung) von Zugabe zu Zugabe.

In Fig. 2 ist die Standard-Abweichung der gemessenen Spannung von einem Zeitmittelwert in Abhängigkeit von der Menge an Nickel-Suspension aufgetragen. Man erkennt sofort die Proportionalität zwischen Standardabweichung und Raney-Nickel-Katalysator-Konzentration.

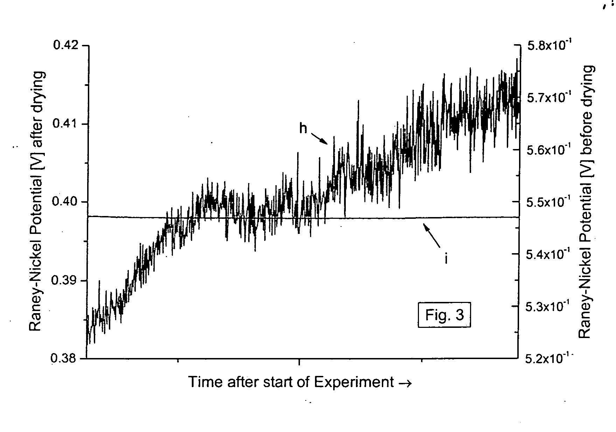

Fig. 3 gibt noch einmal zum Vergleich den Potentialverlauf mit der Zeit eines desaktivierten Raney-Nickel-Katalysators (h) und das Potential eines aktivierten Hydrierkatalysators aus Raney-Nickel gemäß Linie (i). Hiermit wird demonstriert, das eindeutig zwischen aktivem und desaktiviertem Katalysator unterschieden werden kann.

## Patentansprüche

1. Verfahren zur online-Bestimmung der Konzentration von Katalysatormaterial in Suspensionen von Hydrierreaktionsmischungen durch Bestimmen einer Potentialdifferenz und der zeitlichen Schwankung dieser Differenz zwischen einer Messelektrode, die in die konstant gerührte Reaktionsmischung eintaucht und einer Referenzelektrode, wobei die Reaktionsmischung von Wasserstoff kontinuierlich durchströmt wird.

2. Verfahren nach Anspruch 1, **dadurch gekennzeichnet, dass** als Messgröße der Potentialdifferenz die gemessene Absolutspannung oder ein Zeitmittelwert der Spannung von mindestens 1 min, bevorzugt mindestens 2 min, gegebenenfalls Konzentrationsänderung des Katalysators in der Mischung verwendet wird.

3. Verfahren nach Anspruch 1, **dadurch gekennzeichnet, dass** als Messgröße die Standardabweichung der über einen Zeitraum von mindestens 30 Sekunden gemessenen Absolutspannung verwendet wird.

4. Verfahren nach einem der Ansprüche 1 bis 3, **dadurch gekennzeichnet, dass** der pH-Wert der Reaktionsmischung während der Messung konstant gehalten wird, insbesondere durch Verwendung einer Pufferlösung.

5. Verfahren nach einem der Ansprüche 1 bis 4, **dadurch gekennzeichnet, dass** zusätzlich die Temperatur und/oder der Druck in der Reaktionsmischung konstant gehalten wird.

6. Verfahren nach einem der Ansprüche 1 bis 5, **dadurch gekennzeichnet, dass** als Katalysatormaterial Raney-Nickel oder feinverteiltes Platin, Palladium oder Nickel auf Kohle oder Silizinnoxid als Trägermaterial eingesetzt wird, bevorzugt Raney-Nickel oder Platin auf Kohle.

7. Verfahren nach einem der Ansprüche 1 bis 6, **dadurch gekennzeichnet, dass** die Referenzelektrode ionen-leitend mit der Reaktionslösung verbunden ist und sich bevorzugt außerhalb des Reaktors befindet und ein zeitlich konstantes Potential liefert.

8. Verfahren nach Anspruch 7, **dadurch gekennzeichnet, dass** die Referenzelektrode eine Elektrode zweiter Art ist.

9. Verfahren nach einem der Ansprüche 1 bis 8, **dadurch gekennzeichnet, dass** die Messelektrode aus einem chemisch inerten Metall, insbesondere aus Gold besteht.

10. Verfahren nach Anspruch 9, **dadurch gekennzeichnet, dass** die Ableitelektrode in Form eines Bleches, Gitters oder Drahtes vorliegt.

11. Verfahren zur Durchführung von Hydrierreaktion in Lösung unter Verwendung von in der Reaktionsmischung suspendierten Hydrierkatalysator, **dadurch gekennzeichnet, dass** ein Verfahren nach einem der Ansprüche 1 bis 10 zur Überwachung der aktiven Katalysatorkonzentration eingesetzt wird.

12. Verfahren zur Qualitätsbestimmung von Hydrierkatalysatoren in einer gepufferten Lösung, **dadurch gekennzeichnet, dass** ein Verfahren nach einem der Ansprüche 1 bis 10 zur Ermittlung der relativen Konzentration aktiver Katalysatorpartikel in einer Katalysatorsuspension bezogen auf die Gesamtmenge der Katalysatorpartikel eingesetzt wird, wobei die zeitliche Schwankung der Potentialdifferenz gemessen wird und die Konzentration mittels Eichung durch bekannte aktive Katalysatorsuspensionen erfolgt.
